(19) **Europäisches Patentamt / European Patent Office / Office européen des brevets**

(11) **EP 1 752 501 B1**

(12) **EUROPEAN PATENT SPECIFICATION**

(45) Date of publication and mention
of the grant of the patent:
**29.02.2012 Bulletin 2012/09**

(51) Int Cl.:
**C09D 7/12** (2006.01)  **G02B 5/08** (2006.01)
**C03C 17/00** (2006.01)

(21) Application number: **06016456.3**

(22) Date of filing: **07.08.2006**

(54) **Coloured coating material for colour mirror, colour mirror for vehicle, and production processes therefore**

Farbiges Überzugsmittel für gefärbten Spiegel, gefärbte Fahrzeugspiegel, Verfahren zu deren Herstellung

Matériau de revêtement coloré pour miroir coloré, rétroviseur de véhicule, et procédé pour leur fabrication

(84) Designated Contracting States:
**DE FR GB**

(30) Priority: **08.08.2005 JP 2005230008**

(43) Date of publication of application:
**14.02.2007 Bulletin 2007/07**

(73) Proprietors:
- **ICHIKOH INDUSTRIES, LTD.**
  **Tokyo (JP)**
- **RESINO COLOR INDUSTRY CO., LTD.**
  **Osaka-shi, Osaka (JP)**

(72) Inventors:
- **Morohashi, Shigeru**
  **Isehara-shi**
  **Kanagawa (JP)**

- **Dan, Yasushi**
  **Yodogawa-ku**
  **Osaka-shi**
  **Osaka (JP)**
- **Kimura, Shinichi**
  **Sumida-ku**
  **Tokyo (JP)**
- **Sasaki, Eiji**
  **Sumida-ku**
  **Tokyo (JP)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A- 1 336 592      EP-A1- 0 905 100**
**JP-A- 2001 290 012     US-B1- 6 366 397**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to the field of color mirrors, and relates more specifically to a colored coating material that is suitable for coloring a color mirror for a vehicle, as well as a color mirror for a vehicle that uses such a colored coating material, and production processes therefor.

BACKGROUND ART

Color mirrors are used in a variety of different fields, including the automotive industry. In recent years, the development of color mirrors that provide superior glare prevention and design properties, and are suitable for use as either the outside mirrors or inside mirrors of vehicles is attracting considerable attention.

A typical conventional color mirror includes an interference layer, which comprises a plurality of films of different refractive indices, on one surface of a transparent substrate, and a black coating film on the other surface of the transparent substrate (patent reference 1: Japanese Patent Laid-Open No. H02-178603). In a color mirror according to the patent reference 1, the incident light is subjected to interference within the interference layer, causing either the entire mirror, or a portion of the mirror, to appear colored.

However, during formation of the interference layer, a vapor deposition process must be repeated for each individual film, meaning the production process takes considerable time, resulting in poor production efficiency. Furthermore, because color mirrors produced by vapor deposition are multilayered structures, the mirrors are prone to minute variations in the thickness of each film depending on the mounting location within each individual batch. This type of variation in film thickness causes variation in the hue of the mirror, making management of the mirror hue very difficult. Furthermore, color mirrors with an interference layer are prone to variations in the hue depending on the viewing angle, and the reflected image also tends to appear as multiple images.

An example of a method of imparting coloring to a mirror without using an interference layer is a method in which a colored layer is formed on one surface of a transparent substrate. For example, a color mirror obtained by applying a colored coating material to one surface of a transparent substrate using a sol-gel method, thereby forming a colored layer, and then forming a reflective layer on the other surface of the transparent substrate has previously been reported (patent reference 2: Japanese Patent Laid-Open No. 2001-290012). The patent reference 2 discloses the ready formation of a colored layer by application of a sol-gel solution, and the realization of a desired hue for a color mirror by appropriate selection of the pigment. In addition, this patent reference also discloses the imparting of a photocatalytic effect to a color mirror, either by adding a photocatalyst substance to the colored layer as required, or by including an additional photocatalytic layer that comprises a photocatalyst substance.

EP-A-0905100 discloses a coating solution for forming a selectively transmitting film on a transparent base, such as a glass or a plastic material. The coating solution is a dispersion of fine particles having an average diameter of 100 nm or less. The fine particles may be pigment particles selected from ruthenium oxide, iron oxide, iron (III) hydroxide oxide, composite ruthenium oxides, which contain lead or bismuth, and iron nitrogen oxide. The coating solution further contains a film-forming component and a solvent.

US-B-6366397 discloses an infrared reflector comprising an infrared-reflecting layer and an infrared-permeable layer. The compositions used for the preparation of these layers contain a film-forming component, a pigment, and a solvent. Examples of the pigments include iron oxide, titanium oxide, zinc oxide, aluminum, stainless steel, and mica coated with titanium oxide.

EP-A-1336592 discloses a coating solution for the preparation of an anti-fogging optical member, said coating solution comprising a film-forming component, a pigment, and a solvent. Examples of the pigments include silicon oxide, titanium oxide, aluminum oxide, and zirconium oxide.

DISCLOSURE OF INVENTION

In the colored layer within a conventional color mirror, the pigment content within the colored coating material used for forming the colored layer is low. As a result, if such a colored coating material is used for a color mirror within a vehicle, then the color mirror tends to exhibit only very weak color tone, making it difficult to adequately satisfy the requirements for glare prevention and superior design properties, and meaning further improvements are required.

Accordingly, an object of the present invention is to provide a colored coating material with a high pigment content and superior coloration, which is suitable for the colored layer of a color mirror. In addition, other objects of the present invention include providing a color mirror for a vehicle that is produced using such a colored coating material and exhibits excellent glare prevention, visibility, and design properties, and providing a process for producing a color mirror for a vehicle simply and efficiently.

The color tone of a coating material can be altered by altering the thickness of the coating film and the pigment content within the colored coating material. The film thickness of a colored layer applicable to a color mirror is typically no more than 10 $\mu$m, and in order to achieve favorable color tone at that type of film thickness, the pigment content of the colored coating material must be increased. In conventional colored coating materials, the types of pigments that can be used within the colored coating material, and the quantities used of those pigments are severely restricted for reasons such as the transparency, abrasion resistance, and heat resistance of the resulting colored layer. Typically, the pigment content within a colored coating material used for forming a colored layer, reported relative to the total weight of the solid fraction, is within a range from 1 to no more than 30%.

Against this background, the inventors of the present invention discovered that by using a specific calcined inorganic pigment, the desired effects could be achieved, and they were hence able to complete the present invention.

The colored coating material for a color mirror according to the present invention comprises a film-forming component, a pigment, and a solvent, wherein the pigment comprises a composite calcined inorganic pigment being (Co-Cr-Ti-Al) oxide or (Co-Ni-Zn-Ti) oxide, and the pigment has a primary particle average particle size of no more than 0.1 $\mu$m, and the quantity of the pigment, relative to the combined weight of the film-forming component and the pigment, is within the range of from 40 to 90% by mass. The film-forming component is preferably an inorganic binder comprising one or more materials selected from the group consisting of unmodified or modified silicone resins, colloidal silica, alkyl silicates, and water glass.

The process for producing the above colored coating material according to the invention comprises mixing the film-forming component and the pigment within the solvent, and dispersing and kneading the pigment to achieve an average particle size of the pigment dispersed within the solvent of no more than 0.1 $\mu$m.

The color mirror of the invention comprises a glass substrate, a reflective layer formed on one surface of the glass substrate, and a colored layer comprising the colored coating material of the invention, formed on another surface of the glass substrate. In this case, the color mirror preferably also includes a photocatalytic layer on top of the colored layer. Furthermore, an alternative color mirror of the invention comprises a glass substrate, a colored layer comprising the colored coating material of the invention, formed on one surface of the glass substrate, and a reflective layer formed on top of the colored layer. In this case, the color mirror preferably also comprises a photocatalytic layer on another surface of the glass substrate.

According to a preferred embodiment of the invention, the chromaticity of reflected light from the color mirror, measured under conditions including a D65 light source and an angle of 10°, satisfies formulae (I) and (II) shown below for x and y coordinates of the chromaticity diagram in the CIE-XYZ color space:

$$0.25 \leq x \leq 0.35 \qquad (I)$$

$$0.30 \leq y \leq 0.40 \qquad (II)$$

wherein x and y represent chromaticity coordinate values corresponding with tristimulus values X, Y, and Z of the light source color.

The invention is also directed to the use of the color mirror of the invention as an inside mirror or outside mirror for a vehicle.

The process for producing a color mirror having a colored layer of the invention comprises the steps of:

(a) cleaning a glass substrate,

(b) applying the colored coating material of the invention to one surface of the glass substrate, thereby forming a coating film,

(c) calcining the coating film to form a colored layer, and

(d) forming a reflective layer either on another surface of the glass substrate, or on top of the colored layer.

According to a preferred embodiment of the invention, bending of the glass substrate is conducted simultaneously with the calcining treatment of step (c).

BRIEF DESCRIPTION OF THE DRAWINGS

Fig. 1 is a graph showing the spectral reflectance characteristics of color mirrors.
Fig. 2 is a graph showing standard relative spectral sensitivity curves for humans.
Fig. 3 is a schematic cross-sectional view showing an example of a color mirror according to the present invention.
Fig. 4 is a schematic cross-sectional view showing an example of a color mirror according to the present invention.
Fig. 5 is a schematic cross-sectional view showing an example of a color mirror according to the present invention.
Fig. 6 is a schematic cross-sectional view showing an example of a color mirror according to the present invention.
Fig. 7 is a flowchart showing an example of a process for producing a color mirror according to the present invention.

BEST MODE FOR CARRYING OUT THE INVENTION

As follows is a description of details of the present invention.

According to the present invention, there is provided a colored coating material with a high pigment content that is capable of imparting a green color tone to a color mirror, and by applying this type of colored coating material to a glass substrate to form a colored layer, a color mirror with a favorable color tone can be obtained with relative ease. The present invention is particularly suited to color mirrors for vehicles. In other words, according to the present invention, a vehicle outside or inside mirror, which exhibits superior response characteristics to a specific wavelength and has a desirable green hue and tone, and also exhibits excellent glare prevention, visibility, and design properties, can be provided simply and efficiently.

The colored coating material for a color mirror of the present invention comprises a film-forming component, a pigment, and a solvent, wherein the pigment comprises a composite calcined inorganic pigment being (Co-Cr-Ti-Al) oxide or (Co-Ni-Zn-Ti) oxide, and the pigment has a primary particle average particle size of no more than 0.1 $\mu$m, and the quantity of the pigment, relative to the combined weight of the film-forming component and the pigment, is within the range of from 40 to 90% by mass.

This calcined inorganic pigment exhibits excellent heat resistance and weather resistance, and because the pigment comprises very fine particles with a primary particle average particle size of no more than 0.1 $\mu$m, excellent transparency can be obtained even in those cases where the content of the pigment within the colored coating material is increased. If the primary particle average particle size of the pigment exceeds 0.1 $\mu$m, then the light scattering characteristics of the particles increase, and the transparency and coloration of the colored layer tend to deteriorate. Accordingly, the primary particle average particle size of a calcined inorganic pigment used in the present invention is typically no more than 0.1 $\mu$m, and is preferably 0.07 $\mu$m or smaller. The finer the pigment particles are the better, but from a practical viewpoint, the average particle size is usually approximately 0.01 $\mu$m or greater, and average particle sizes within a range from 0.01 to 0.05 $\mu$m are the most desirable. In the pigment that is used, primary particles may aggregate together to form secondary particles, but once these are dispersed stably within a colored paste or coating material component by a dispersion treatment, the average particle size of the pigment must be no more than 0.1 $\mu$m.

In this description, the primary particle average particle size of a pigment is measured using an electron microscope, and the average particle size of a pigment in a dispersed state is measured by a centrifugal sedimentation method using a particle size distribution analyzer CAPA-700 (a product name) manufactured by Horiba, Ltd.

For a person skilled in the art, the calcined inorganic pigment can be produced by a conventional wet synthesis method. For example, solutions containing the metal elements are first mixed together uniformly, and the composite metal product is precipitated out of the mixed solution, and then subjected to heat calcination. Subsequently, the calcined composite metal product is washed with water to remove any soluble salts, and is then dried and crushed, yielding a solid solution powder of metal oxides that functions as a pigment. This type of calcined inorganic pigment is available in the form of commercial products.

In the present invention, in order to obtain the desired hue, organic pigments including blue or green organic pigments of phthalocyanine-based compounds such as phthalocyanine blue, phthalocyanine green and brominated phthalocyanine green; yellow organic pigments of isoindrinone-based compounds; and orange or red organic pigments of metal complex azo-based or condensed azo-based compounds, anthraquinone-based compounds, and diketopyrrolopyrrole-based compounds may be used as auxiliary pigments if required, in addition to the composite calcined inorganic pigments. These organic pigments preferably also exhibit excellent transparency and weather resistance, and should be in the form of fine particles with a primary particle average particle size of no more than 0.1 $\mu$m.

Even in cases where the pigment content of the colored coating material, reported relative to the solid fraction that constitutes the coating film, that is, reported relative to the combined weight of the film-forming component and the pigment, is approximately 10% by mass, the coating material still exhibits some coloration. However, in order to obtain the desired color tone for a color mirror, the pigment content relative to the combined weight of the film-forming component and the pigment is within a range from 40 to 90% by mass, preferably from 45 to 80% by mass, and is most preferably from 50 to 70% by mass. If the pigment content is less than 40% by mass then the coloration of the colored layer deteriorates, and achieving a color tone that is satisfactory for a color mirror becomes difficult. In contrast, if the pigment content exceeds 90% by mass (that is, if the proportion of the film-forming component such as the binder or the like is 10% by mass or less), then the adhesion of the coating material to glass substrates, and the mechanical properties of the colored layer such as the coating film strength tend to deteriorate undesirably.

The film-forming component of the colored coating material may use either an organic or inorganic binder. If an organic binder is used, then various additives such as curing agents may also be added. Although there are no particular restrictions on the binder, if consideration is given to the transparency, heat resistance and weather resistance of the colored layer, and to the adhesion of the colored layer to the substrate, then the use of an inorganic binder is preferred.

Specific examples of suitable inorganic binders include compounds that contain siloxane linkages (-Si-O-Si-) within the molecule, for example unmodified silicone resins such as silicone resins, dimethylsilicone resins that are typically referred to as straight silicone resins, and methylphenylsilicone resins; modified silicone resins such as methylhydrogensilicone resins, silicone polyester resins, silicone epoxy resins, silicone acrylic resins, silicone alkyd resins, silicone phenol resins, and silicone polyurethane resins; colloidal silica; alkyl silicates such as methyl silicate, ethyl silicate, and butyl silicate; and water glass. These compounds can be used alone, or in combinations containing a plurality of different compounds.

Compounds that contain siloxane linkages (-Si-O-Si-) within the molecule have a stronger bond energy and are more stable than the carbon linkages (-C-C-) found in typical organic binders, and also exhibit other superior properties, including minimal contraction of the coating film under high temperature conditions and a high degree of hardness for the coating film.

The quantity of the film-forming component within the colored coating material, relative to the combined weight of the film-forming component and the pigment, is typically within a range from 10 to 60% by mass, preferably from 20 to 55% by mass, and is even more preferably from 30 to 50% by mass. If the quantity of the film-forming component exceeds 60% by mass, then the coloration of the material deteriorates, whereas if the quantity is less than 10% by mass, the adhesion of the coating material to glass substrates, and the mechanical properties such as the coating film strength tend to deteriorate.

Any of the organic solvents typically used as colored coating material solvents can be used as the solvent. Although there are no particular restrictions on the solvent, solvents that exhibit excellent compatibility with the film-forming component that comprises the inorganic binder are desirable, and suitable examples include organic solvents, including aromatic and alicyclic solvents such as toluene and cyclohexanone, esters such as ethyl acetate and butyl acetate, ketones such as methyl ethyl ketone, cellosolves such as ethylene glycol monoethyl ether, and alcohols such as methanol, ethanol and isopropanol, and these solvents can be used either alone, or in combinations of two or more different solvents.

There are no particular restrictions on the quantity of the solvent within the colored coating material, which can be adjusted appropriately in accordance with factors such as the viscosity of the colored coating material. From a practical perspective, the quantity of solvent is preferably no more than 1,000 parts by mass per 100 parts by mass of the film-forming component. More specifically, the quantity of the solvent is preferably sufficient to ensure that the combined quantity of the film-forming component and the pigment within the colored coating material, relative to the total weight of the colored coating material, is within a range from 5 to 50% by mass.

A colored coating material of the present invention is produced by mixing together the colored coating material components, including the film-forming component, the pigment, any additives that are used as required, and the solvent, and then kneading and dispersing the pigment. Because the blended calcined inorganic pigment is very fine, with a primary particle average particle size of no more than 0.1 $\mu$m, it tends to be prone to aggregation that generates secondary particles. In order to achieve a colored layer with excellent transparency, any secondary particles within the pigment must be disaggregated, so that the pigment is dispersed uniformly through the material as primary particles. In other words, the average particle size of the pigment dispersed within the solvent must be no more than 0.1 $\mu$m.

As a result, a powerful shearing force must be applied during the kneading and dispersion step, and the use of a mechanical device such as a beads mill, ball mill, sand mill, three-roll mill, or paint shaker is preferred. The shearing force conditions can be adjusted appropriately in accordance with the device that is used to ensure that the desired state of dispersion is achieved. Although there are no particular restrictions, conducting the kneading and dispersion using a beads mill dispersion device that employs fine media balls with a diameter of no more than 1 mm is particularly preferred.

There are no particular restrictions on the order in which each of the components is mixed, and for example, the pigment, a dispersant (or a dispersion assistant resin), and the solvent could be mixed together first, and the film-forming component then added and mixed into the thus formed paste. In such a case, the average particle size of the pigment within the paste should be no more than 0.1 $\mu$m. Alternatively, a portion of the solvent could be added during dispersion of the pigment, and the remainder then added together with the film-forming component.

In order to improve the dispersibility of the pigment, if required, the colored coating material may be heated, or a dispersant may be added. There are no particular restrictions on the dispersant (dispersion assistant resin), and suitable examples include dispersants obtained by introducing carboxylic acid groups or amine groups into a resin skeleton comprising an acrylic resin, urethane resin, polyester resin, silicone resin, or fluororesin. The dispersant does not form a coating film, and usually evaporates or disappears during calcining of the coating film at a high temperature of 300°C or greater.

In addition, various other additives may also be added to the colored coating material as required, including additives for imparting favorable coating characteristics such as leveling agents and antifoaming agents, and additives for imparting desirable performance to the colored layer obtained following calcining such as photostabilizers, antioxidants, heat stabilizers, ultraviolet absorbers and ultraviolet stabilizers.

A color mirror according to the present invention comprises a glass substrate, a colored layer formed from a colored coating material for a color mirror according to the present invention, and a reflective layer. According to the present invention, because the colored layer is formed from a specific colored coating material for a color mirror, a color mirror with desirable color tone can be provided. Furthermore, by appropriate selection of the pigment within the colored coating material, color mirrors can be provided in all manner of hues that have proven difficult to produce using conventional methods. The hue of the color mirror can be adjusted in accordance with the intended application, by appropriate selection of the hue of the colored coating material and the thickness of the coating film.

In a preferred embodiment, the chromaticity for reflected light from the color mirror, measured under conditions including a D65 light source and an angle of 10°, preferably satisfies the formulas (I) and (II) shown below for the x and y coordinates of a chromaticity diagram in CIE-XYZ color space:

$$0.25 \leq x \leq 0.35 \qquad \text{(I)}$$

$$0.30 \leq y \leq 0.40 \qquad \text{(II)}$$

(wherein, x and y represent chromaticity coordinate values corresponding with tristimulus values X, Y, and Z of the light source color).

A color mirror that satisfies the chromaticity ranges specified by the above formulas (I) and (II) has a hue that is green, exhibits excellent design properties, and has a low reflectance for light from vehicle lamps such as halogen lamps and high intensity discharge (HID) lamps, namely, exhibits excellent glare prevention and visibility. As a result, this type of color mirror is ideal for the inside or outside mirrors of a vehicle.

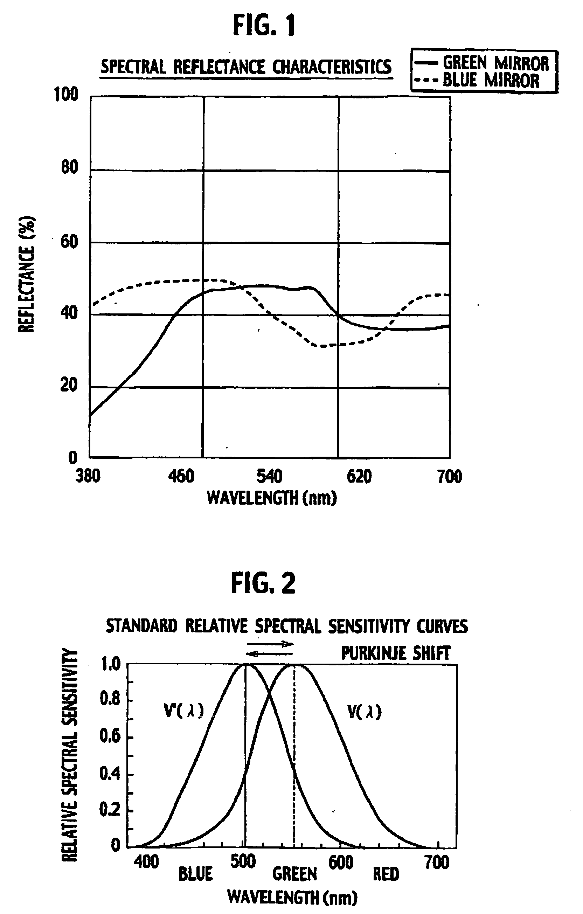

Fig. 1 shows examples of the spectral reflectance characteristics of color mirrors. As is evident from Fig. 1, a green color mirror exhibits reduced reflectance in the wavelength region from 380 to 460 nm, and consequently exhibits excellent glare prevention relative to light from HID lamps, which has intense energy in the short wavelength region.

Fig. 2 shows a graph relating to the standard relative spectral sensitivity for human vision. As is evident from Fig. 2, human vision of light peaks at a wavelength of 555 nm (yellowish green light) in bright light conditions (daylight), and peaks at a wavelength of 510 nm (blue light) under dim light conditions (nighttime). This shift in spectral sensitivity is known as the Purkinje Shift, and means that in dark conditions, spectral sensitivity shifts towards blue colors. As a result, by selecting the color tone with appropriate consideration of spectral sensitivity, the levels of visibility and glare prevention can be enhanced. A green color mirror has a spectral sensitivity that peaks during daylight, thereby providing excellent visibility, but when the spectral sensitivity shifts under nighttime conditions, the mirror is able to provide superior glare prevention characteristics. Furthermore, a green color mirror also provides a wavelength that is easy on the human eye, and is consequently extremely desirable.

As follows is a description of details of a color mirror according to the present invention, with reference to the drawings.

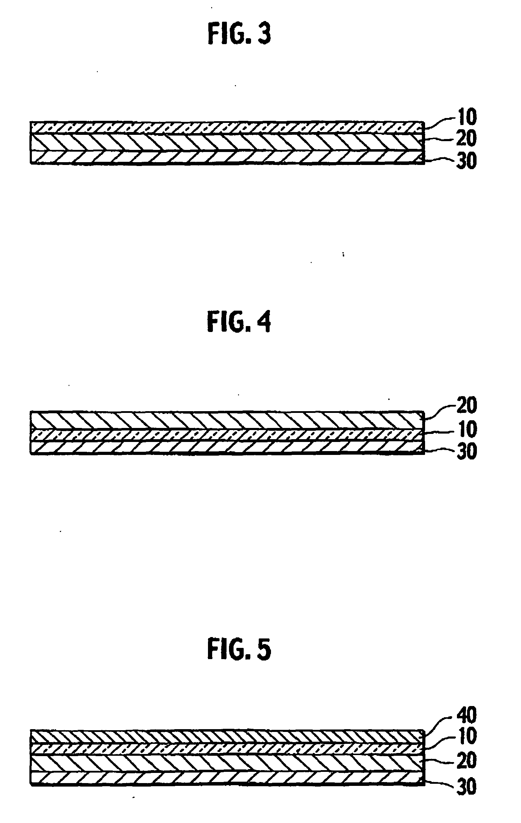

Fig. 3 is a schematic cross-sectional view showing an example of a color mirror according to the present invention. As shown in Fig. 3, the color mirror comprises a glass substrate 10, a colored layer 20 provided on one surface of the glass substrate 10, and a reflective layer 30 provided on the surface of the colored layer 20. In a color mirror of this type construction, the light incident plane or surface is the glass substrate, and consequently the colored layer is not directly exposed externally, meaning the color mirror has excellent abrasion resistance.

Fig. 4 is a schematic cross-sectional view showing another example of a color mirror according to the present invention. As shown in Fig. 4, this color mirror comprises a glass substrate 10, a colored layer 20 provided on one surface of the glass substrate, and a reflective layer 30 provided on the other surface of the glass substrate. In this embodiment, the colored layer 20 is positioned at the outer surface of the color mirror, but in the present invention, because the colored layer of the color mirror exhibits superior levels of adhesion and weather resistance, this color mirror provides excellent durability compared with conventional color mirrors in which the colored layer acts as the surface layer.

There are no particular restrictions on the glass substrate of the color mirror. For example, a flat sheet of a conventional glass such as soda glass can be used.

By controlling the film thickness of the colored layer under uniform conditions, fluctuations in the color tone of the colored layer within a single production lot can be reduced, meaning high quality color mirrors can be produced with favorable levels of efficiency.

The film thickness of the colored layer preferably yields a dried film thickness within a range from 0.01 to 100 $\mu$m, and even more preferably from 0.1 to 10 $\mu$m. If the film thickness is less than 0.01 $\mu$m, then the coloration deteriorates, whereas if the film thickness exceeds 100 $\mu$m, then the time required for the coating process becomes overly long, and the physical properties of the coating film also tend to deteriorate.

The reflective layer of the color mirror can employ conventional materials and configurations typically used as mirror reflective layers. For example, single layered films or multilayered films formed from metals and/or alloys with a light reflectance of 20 to 90% are suitable. Films of highly reflective metals such as Al or Cr produced by conventional methods such as sputtering are preferably selected in accordance with the intended application.

Although there are no particular restrictions on the reflective layer, an Al vapor deposition film is favorable in those cases where a high level of reflectance, that is, favorable visibility is required of the mirror. For example, the outside mirrors of trucks are fitted in a raised position, and because the light from following vehicles does not strike the mirrors directly, glare prevention is unnecessary, but because these outside mirrors contribute greatly as rear visibility devices, a high level of reflectance is necessary.

A Cr vapor deposition film is ideal in those cases where glare prevention is required of the mirror. For example, outside mirrors for passenger vehicles are fitted at much lower positions than those of trucks or the like, meaning they are prone to glare caused by the direct light from following vehicles. Furthermore, because passenger vehicles are also fitted with an internal rearview mirror, the driver is able to directly view a wide area. Accordingly, the mirrors of passenger vehicles need not have the high reflectance provided by an Al vapor deposition film, but rather, are better suited to Cr vapor deposition films.

In a color mirror according to the present invention, one or more additional layers such as protective layers, water-repellent layers, hydrophilic layers, or photocatalytic layers, all of which are commonly known within this technical field, may also be provided on the surface (the light incident surface) of the color mirror. Provided each layer is able to generate the desired function, either a single layer or multilayer construction may be used. There are no particular restrictions on the method used for forming these additional layers and conventional film formation methods such as coating methods or vapor deposition methods can be used.

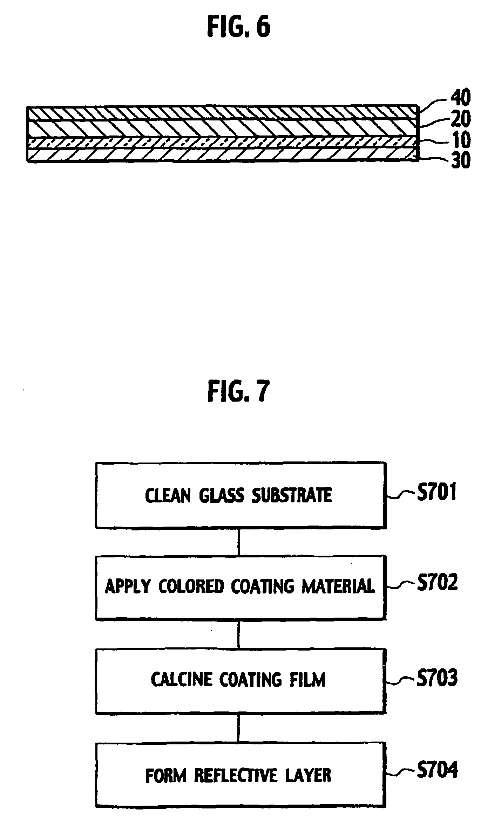

A color mirror produced by providing a photocatalytic layer 40 on the surface (on top of the glass substrate 10) of the color mirror shown in Fig. 3 is shown in Fig. 5. Furthermore, a color mirror produced by providing a photocatalytic layer 40 on the surface (on top of the colored layer 20) of the color mirror shown in Fig. 4 is shown in Fig. 6.

A process for producing a color mirror according to the present invention is designed for the production of a color mirror according to the present invention described above. This process for producing a color mirror comprises (a) cleaning a glass substrate, (b) applying a colored coating material for a color mirror according to the present invention to one surface of the glass substrate, thereby forming a coating film, (c) calcining the coating film on top of the glass substrate to form a colored layer, and (d) forming a reflective layer either on the other surface of the glass substrate, or on top of the colored layer.

As follows is a detailed description of each step in the process for producing a color mirror, with reference to Fig. 7. Fig. 7 is a flowchart describing a general outline of the process for producing a color mirror according to the present invention.

First, a conventional method such as ultrasonic cleaning or brush cleaning is used to clean the surface of the glass substrate (S701). Next, a colored coating material for a color mirror according to the present invention is applied to the surface of the cleaned glass substrate, and dried (by removal of the solvent component), thereby forming a coating film (S702). There are no particular restrictions on the method of application of the colored coating material, and suitable methods include air spray coating, spin coating, dipping, and curtain coating. The application of the colored coating material is preferably conducted so that the dried film thickness of the coating film falls within a range from 0.01 to 100 $\mu$m, and even more preferably from 0.1 to 10 $\mu$m. If the dried film thickness of the coating film is less than 0.01 $\mu$m, then coloration of the film is inadequate, whereas if the dried film thickness exceeds 100 $\mu$m, then the efficiency of the coating operation deteriorates, and the physical properties of the coating film also tend to deteriorate undesirably.

Next, the coating film on the glass substrate is calcined to form a colored layer (S703). This colored layer can be formed by drying and calcining the coating film formed in the previous step, typically at a temperature of 50 to 700°C over a period of 1 to 60 minutes. However, color mirrors for vehicles require a suitable degree of hardness in order to ensure that their level of performance can be maintained during use. As a result, in those cases where a color mirror for a vehicle is produced using the steps described above, once the colored coating material has been applied to the glass substrate, the resulting coating film is preferably subjected to calcination at 600 to 800°C for a period of 1 to 60 minutes, and even more preferably at 650 to 750°C for a period of 1 to 10 minutes. By conducting calcination under these types of high temperature conditions, a satisfactory degree of hardness can be imparted to the colored layer.

Production of a typical vehicle mirror usually includes a step for conducting bending of the glass substrate. Because this bending process is usually conducted under high temperature conditions of 600 to 800°C, the calcination of the coating film can also be conducted during this type of bending process. In other words, in a preferred embodiment, by conducting the bending of the glass substrate at the same time as the calcination of the glass substrate, the color mirror can be produced more efficiently.

In a specific example, the glass substrate with a coating film formed thereon is placed in a conventional diatomaceous earth or ceramic bending die. This bending die is then placed in a furnace that has been heated to 600 to 800°C, so that the coating film undergoes calcination at the same time the glass substrate undergoes softening, thus forming the colored layer. Subsequently, by applying a vacuum to the plurality of holes provided in the bending die, the glass substrate bearing the colored layer is bent to the shape of the die. Following removal of the bending die from the furnace and subsequent cooling, the bent glass substrate with the colored layer is removed from the die, thereby completing the bending of the glass substrate and the calcination of the coating film at the same time.

Next, a reflective layer is formed on the glass substrate, which bears the colored layer and has undergone bending where required (S704). This reflective layer may be provided either on top of the colored layer on the glass substrate, or on the rear surface of the glass substrate. Prior to the step of forming the reflective layer, a conventional cleaning method such as ultrasonic cleaning or brush cleaning is preferably used to clean the glass substrate bearing the colored layer. There are no particular restrictions on the reflective layer, but metal layers such as Cr can be formed by conducting film formation using sputtering methods. Alternatively, a reflective layer can also be formed by conducting film formation of a metal such as Al using a vapor deposition method. If an Al vapor deposition film is used as the reflective layer, then the Al vapor deposition film must be protected from corrosion by applying a butadiene-melamine-based coating material or the like to the surface of the Al vapor deposition film using a flow coater or the like.

In this manner, according to the present invention, because the colored layer is formed by application of a colored coating material, a color mirror can be produced by a simpler and cheaper method than conventional sputtering or vapor deposition methods. Because the colored coating material for a color mirror that is used to form the colored layer exhibits excellent heat resistance and weather resistance, the desired color tone of the color mirror can be retained with no deterioration, even under the high temperature conditions used during molding of the glass substrate. In addition, by appropriate selection of the coating material, color mirrors of various colors can be produced with ease.

EXAMPLES

As follows is a description of specifics of the present invention based on a series of examples.

(Example 1)

1. Preparation of a Colored Coating Material

30 parts by mass of a (Co-Ni-Zn-Ti) oxide cobalt green pigment (primary particle size: 0.04 $\mu$m), 5 parts by mass of a dispersion assistant resin (Solsperse 24000 (a trade name), manufactured by The Lubrizol Corporation; the same resin is used in subsequent examples), and 65 parts by mass of n-butanol were placed inside a sand mill, and subsequently subjected to kneading and dispersion over a 6-hour period within a temperature range from 20 to 40°C, thereby yielding a light green paste. The average particle size of the pigment within the paste was 0.04 $\mu$m.

To 100 parts by mass of this prepared paste were added a quantity of a silicone-based resin (KR-9706 (a product name), manufactured by Shin-Etsu Chemical Co., Ltd. ; the same resin is used in subsequent examples) equivalent to a solid fraction of 10 parts by mass, together with 25 parts by mass of ethyl acetate and 25 parts by mass of toluene, and the resulting mixture was kneaded and dispersed, yielding a coating material. In this manner, a light green coating material with a pigment content of 75% by mass relative to the combined weight of the pigment and the silicone-based resin was obtained. 2. Production of a Color Mirror

The prepared light green coating material was applied to one surface of a glass substrate, and subsequently subjected to baking treatment at 320°C for 60 minutes, thereby forming a colored layer with a film thickness of 2 $\mu$m. The results of evaluating the adhesion, coloration and heat resistance of the colored layer are shown in Table 1.

A light green mirror was then obtained by using a sputtering method to form a reflective layer of chrome on the opposite surface of the glass substrate to the colored layer. The results of evaluating the hue of the mirror are shown in Table 2.

(Example 2)

With the exception of using 13 parts by mass of the silicone-based resin, 33 parts by mass of ethyl acetate and 33 parts by mass of toluene, a light green coating material was prepared in the same manner as the example 1. The thus obtained green coating material had a pigment content of 70% by mass relative to the combined weight of the pigment and the silicone-based resin. Subsequently, a colored layer and then a reflective layer were formed in the same manner as the example 1, thus producing a light green mirror. The results of evaluating the colored layer are shown in Table 1.

(Example 3)

With the exception of using 20 parts by mass of the silicone-based resin, 50 parts by mass of ethyl acetate and 50 parts by mass of toluene, a light green coating material was prepared in the same manner as the example 1. The thus obtained coating material had a pigment content of 60% by mass relative to the combined weight of the pigment and the silicone-based resin. Subsequently, a colored layer and then a reflective layer were formed in the same manner as the example 1, thus producing a light green mirror. The results of evaluating the colored layer are shown in Table 1.

(Example 4)

With the exception of using 40 parts by mass of the silicone-based resin, 100 parts by mass of ethyl acetate and 100 parts by mass of toluene, a light green coating material was prepared in the same manner as the example 1. The thus obtained coating material had a pigment content of 43% by mass relative to the combined weight of the pigment and the silicone-based resin. Subsequently, a colored layer and then a reflective layer were formed in the same manner as the example 1, thus producing a light green mirror. The results of evaluating the colored layer are shown in Table 1. Furthermore, the results of evaluating the hue of the mirror are shown in Table 2.

(Comparative Example 1)

With the exception of using 3 parts by mass of the silicone-based resin, a light green coating material was prepared in the same manner as the example 1. The thus obtained coating material had a pigment content of 91% by mass relative to the combined weight of the pigment and the silicone-based resin. Subsequently, a colored layer and then a reflective layer were formed in the same manner as the example 1, thus producing a light green mirror. The results of evaluating the colored layer are shown in Table 1.

(Comparative Example 2)

With the exception of using 50 parts by mass of the silicone-based resin, a light green coating material was prepared in the same manner as the example 1. The thus obtained coating material had a pigment content of 38% by mass relative to the combined weight of the pigment and the silicone-based resin. Subsequently, a colored layer and then a reflective layer were formed in the same manner as the example 1, thus producing a light green mirror. The results of evaluating the colored layer are shown in Table 1.

(Comparative Example 3)

With the exception of using a CoCrNi cobalt green pigment (Green 2024 (a trade name), manufactured by Asahi Kasei Corporation, primary particle size: 1.1 $\mu$m), a light green paste and then a coating material were prepared in the same manner as the example 1. The average particle size of the pigment within the paste was 2.1 $\mu$m, and the pigment content within the coating material was 75% by mass relative to the combined weight of the pigment and the silicone-based resin. Subsequently, a colored layer and then a reflective layer were formed in the same manner as the example 1, thus producing a light green mirror. The results of evaluating the colored layer are shown in Table 1.

(Comparative Example 4)

30 parts by mass of a brominated phthalocyanine green pigment (6Y-503 (a product name), manufactured by Toyo Ink Mfg. Co., Ltd., primary particle size: no more than 0.1 $\mu$m), 5 parts by mass of a dispersion assistant resin (Solsperse 24000), and 65 parts by mass of n-butanol were placed inside a sand mill, and subsequently subjected to kneading and dispersion over a 6-hour period within a temperature range from 20 to 40°C, thereby yielding a light green paste. The average particle size of the pigment within the paste was 0.07 $\mu$m.

To 100 parts by mass of this prepared paste were added a quantity of a silicone-based resin (KR-9706) equivalent to a solid fraction of 150 parts by mass, together with 150 parts by mass of ethyl acetate and 150 parts by mass of toluene, and the resulting mixture was kneaded and dispersed, yielding a coating material. In this manner, a light green coating material with a pigment content of 17% by mass relative to the combined weight of the pigment and the silicone-based resin was obtained. Subsequently, a colored layer and then a reflective layer were formed in the same manner as the example 1, thus producing a light green mirror. The results of evaluating the colored layer are shown in Table 1.

(Example 5)

1. Preparation of a Colored Coating Material

30 parts by mass of a (Co-Cr-Ti-Al) oxide cobalt green pigment (primary particle size: 0.04 $\mu$m), 5 parts by mass of a dispersion assistant resin (Solsperse 24000), and 65 parts by mass of n-butanol were placed inside a sand mill, and subsequently subjected to kneading and dispersion over a 6-hour period within a temperature range from 20 to 40°C, thereby yielding a green paste. The average particle size of the pigment within the paste was 0.04 $\mu$m.

To 100 parts by mass of this prepared paste were added 20 parts by mass of a silicone-based resin (KR-9706), 50 parts by mass of ethyl acetate and 50 parts by mass of toluene, and the resulting mixture was kneaded and dispersed, yielding a coating material. In this manner, a green coating material with a pigment content of 60% by mass relative to the combined weight of the pigment and the silicone-based resin was obtained. 2. Production of a Color Mirror

The prepared green coating material was applied to one surface of a glass substrate, and subsequently subjected to baking treatment at 320°C for 60 minutes, thereby forming a colored layer with a film thickness of 2 $\mu$m. The results of evaluating the colored layer are shown in Table 1.

A green mirror was then obtained by using a sputtering method to form a reflective layer of chrome on the opposite surface of the glass substrate to the colored layer. The results of evaluating the hue of the mirror are shown in Table 2.

(Example 6)

With the exception of using 10 parts by mass of the silicone-based resin, 25 parts by mass of ethyl acetate and 25 parts by mass of toluene, a coating material was prepared in the same manner as the example 5. The thus obtained green coating material had a pigment content of 75% by mass relative to the combined weight of the pigment and the silicone-based resin. Subsequently, a colored layer and then a reflective layer were formed in the same manner as the example 5, thus producing a green mirror. The results of evaluating the colored layer are shown in Table 1. Furthermore, the results of evaluating the hue of the mirror are shown in Table 2.

(Example 7)

1. Preparation of a Colored Coating Material

30 parts by mass of a (Co-Cr-Ti-Al) oxide cobalt blue-green pigment (primary particle size: 0.03 $\mu$m), 5 parts by mass of a dispersion assistant resin (Solsperse 24000), and 65 parts by mass of n-butanol were placed inside a sand mill, and subsequently subjected to kneading and dispersion over a 6-hour period within a temperature range from 20 to 40°C, thereby yielding a blue-green paste. The average particle size of the pigment within the paste was 0.05 $\mu$m.

To 100 parts by mass of this prepared paste were added a quantity of a silicone-based resin (KR-9706) equivalent to a solid fraction of 20 parts by mass, together with 50 parts by mass of ethyl acetate and 50 parts by mass of toluene, and the resulting mixture was kneaded and dispersed, yielding a coating material. In this manner, a blue-green coating material with a pigment content of 60% by mass relative to the combined weight of the pigment and the silicone-based resin was obtained. 2. Production of a Color Mirror

The prepared blue-green coating material was applied to one surface of a glass substrate, and subsequently subjected to baking treatment at 320°C for 60 minutes, thereby forming a colored layer with a film thickness of 2 $\mu$m. The results of evaluating the colored layer are shown in Table 1.

A blue-green mirror was then obtained by using a sputtering method to form a reflective layer of chrome on the opposite surface of the glass substrate to the colored layer. The results of evaluating the hue of the mirror are shown in Table 2.

(Example 8)

With the exception of using 10 parts by mass of the silicone-based resin, 25 parts by mass of ethyl acetate and 25 parts by mass of toluene, a coating material was prepared in the same manner as the example 7. The thus obtained blue-green coating material had a pigment content of 75% by mass relative to the combined weight of the pigment and the silicone-based resin. Subsequently, a colored layer and then a reflective layer were formed in the same manner as the example 7, thus producing a blue-green mirror. The results of evaluating the colored layer are shown in Table 1. Furthermore, the results of evaluating the hue of the mirror are shown in Table 2.

(Example 9)

1. Preparation of a Colored Coating Material

30 parts by mass of a (Co-Ni-Zn-Ti) oxide cobalt green pigment (primary particle size: 0.04 $\mu$m), 5 parts by mass of a dispersion assistant resin (Solsperse 24000), and 65 parts by mass of n-butanol were placed inside a sand mill, and subsequently subjected to kneading and dispersion over a 6-hour period within a temperature range from 20 to 40°C, thereby yielding a light green paste. The average particle size of the pigment within the paste was 0.04 $\mu$m.
To 100 parts by mass of this prepared paste were added a quantity of a silicone-based resin (KR-9706) equivalent to a solid fraction of 10 parts by mass, together with 25 parts by mass of ethyl acetate and 25 parts by mass of toluene, and the resulting mixture was kneaded and dispersed, yielding a coating material. In this manner, a light green coating material with a pigment content of 75% by mass relative to the combined weight of the pigment and the silicone-based resin was obtained. 2. Production of a Color Mirror
The prepared coating material was applied to one surface of a glass substrate, and subsequently subjected to baking treatment at 650°C for 10 minutes, thereby forming a colored layer with a film thickness of 2 $\mu$m. The results of evaluating the colored layer are shown in Table 1.
A light green mirror was then obtained by using a sputtering method to form a reflective layer of chrome on the opposite surface of the glass substrate to the colored layer. The results of evaluating the hue of the mirror are shown in Table 2.

Table 1: Evaluation of Colored Layers formed from each Coating Material

|  | Pigment average particle size [1] | Pigment content [2] | Colored layer adhesion [3] | Colored layer coloration [4] | Colored layer heat resistance [5] |
|---|---|---|---|---|---|
| Example 1 | 0.04 | 75 | A | A | A |
| Example 2 | 0.04 | 70 | A | A | A |
| Example 3 | 0.04 | 60 | A | A | A |
| Example 4 | 0.04 | 43 | A | B | A |
| Example 5 | 0.04 | 60 | A | A | A |
| Example 6 | 0.04 | 75 | A | A | A |
| Example 7 | 0.05 | 60 | A | A | A |
| Example 8 | 0.05 | 75 | A | A | A |
| Example 9 | 0.04 | 75 | A | A | A |
| Comparative example 1 | 0.04 | 91 | C | A | A |
| Comparative example 2 | 0,04 | 38 | A | C | A |
| Comparative example 3 | 2.1 | 75 | A | C | A |

(continued)

|  | Pigment average particle size [1] | Pigment content [2] | Colored layer adhesion [3] | Colored layer coloration [4] | Colored layer heat resistance [5] |
|---|---|---|---|---|---|
| Comparative example 4 | 0.07 | 17 | A | C | C |

Notes:

1) The pigment average particle size was measured by diluting the paste obtained by kneading and dispersion with n-butanol, and refers to the value subsequently measured by a centrifugal sedimentation method using a particle size distribution analyzer CAPA-700 (a product name) manufactured by Horiba, Ltd.

2) The pigment content refers to the value relative to the combined weight of the film-forming component (the silicone-based resin) and the pigment within the colored coating material.

3) The adhesion was evaluated by forming cross cuts in the coating film using a cutter knife, sticking Sellotape (a registered trademark) to the surface of the coating film, pulling the Sellotape firmly away from the coating film, and then visually evaluating the external appearance of the coating film in accordance with the criteria shown below. A: All of the cross cut portions remained adhered to the substrate B: A portion of the cross cut portions were peeled off C: All of the cross cut portions were peeled off 4) The coloration was adjudged visually, and was then evaluated in accordance with the criteria shown below. A: Coloration can be easily confirmed visually. Moreover, transparency is good, light reflection is favorable, and mirror function is retained. B: Slight coloration can be confirmed visually. Moreover, transparency is good, light reflection is satisfactory, and mirror function is retained. C: Coloration cannot be confirmed visually. Moreover, the structure lacks transparency, does not reflect light, and has no mirror function.

5) The heat resistance was evaluated by subjecting the colored layer, formed by baking of the coating film, to further baking at 750°C for 3 minutes, subsequently inspecting the hue of the colored layer for change, and then evaluating the heat resistance in accordance with the criteria shown below.

A: No change in the hue of the colored layer B: Slight change in the hue of the colored layer C: Significant color degradation in the hue of the colored layer

As is evident from Table 1, if the pigment content within the coating material is less than a predetermined quantity, then satisfactory coloration cannot be achieved, whereas if the pigment content exceeds another predetermined quantity, then the adhesion and strength of the coating film become inadequate. Moreover, if a pigment with an average particle size exceeding 0.1 $\mu$m is used, then the coating film loses transparency, target objects reflected in the mirror become difficult to identify, and the mirror function deteriorates. In contrast, a coating material that includes a pigment with an average particle size of no more than 0.1 $\mu$m in a quantity that falls within a predetermined range exhibits excellent adhesion and coloration properties. 2

Table 2

|  | CIE - XYZ [1] | | | CIE - L*a*b* [2] | | | | |
|---|---|---|---|---|---|---|---|---|
|  | X | y | z | L | a | b | c | H° |
| Example 1 | 0.312 | 0.356 | 0.332 | 77.10 | -10.52 | 7.45 | 12.89 | 145.0 |
| Example 4 | 0.314 | 0.358 | 0.328 | 74.01 | -9.66 | 8.67 | 12.98 | 138.0 |
| Example 5 | 0.284 | 0.350 | 0.366 | 68.61 | -18.25 | 1.31 | 18.30 | 175.9 |
| Example 6 | 0.277 | 0.354 | 0.369 | 66.64 | -22.18 | 1.41 | 22.23 | 176.4 |
| Example 7 | 0.274 | 0.324 | 0.402 | 68.92 | -17.51 | -7.26 | 18.95 | 202.5 |
| Example 8 | 0.258 | 0.327 | 0.415 | 67.39 | -22.81 | -7.70 | 24.07 | 198.7 |

(continued)

|  | CIE - XYZ [1] | | | CIE - L*a*b* [2] | | | | |
|---|---|---|---|---|---|---|---|---|
|  | X | y | z | L | a | b | c | H° |
| Example 9 | 0.315 | 0.364 | 0.321 | 74.30 | -11.76 | 9.98 | 15.42 | 139.68 |

Notes: 1) CIE-XYZ measurements: a D65 light source prescribed by the International Commission on Illumination (CIE) was irradiated onto the color mirror at an angle of 10°, and the reflected light from the color mirror was measured using a color difference measurement apparatus CM-3700d (a product name) manufactured by Konica Minolta Holdings, Inc., and displayed using an XYZ color space chromaticity diagram (in accordance with JIS Z8701 (1982)).
2) CIE-L*a*b* measurements: a D65 light source prescribed by the International Commission on Illumination (CIE) was irradiated onto the color mirror at an angle of 10°, and the reflected light from the color mirror was measured using a color difference measurement apparatus CM-3700d (a product name) manufactured by Konica Minolta Holdings, Inc., and displayed using a L*a*b* color space chromaticity diagram (in accordance with JIS Z8729 (1980)). H° (the hue angle) was determined from the formula $\tan^{-1}(b/a)$.

As is evident from Table 2, by using color mirrors according to the present invention, green color tones can be realized. Furthermore, when sensory evaluations were conducted to assess the glare prevention and visibility of the color mirrors of the present invention, favorable results were obtained for both properties.

(Example 10)

The color mirrors prepared in the previous examples 1, 7 and 9 were subjected to each of the tests (1) through (10) described below in order to evaluate the properties of each of the color mirrors. The results are shown in Table 3.

(1) Moisture resistance: the color mirror was left to stand for 240 hours under conditions including a temperature of 50°C and a humidity of 98%, and was then evaluated for change.
(2) Steam boiling resistance: the color mirror was left to stand for 5 hours within a saturated steam environment at 90°C, and was then evaluated for change.
(3) Hot-cold cycling resistance: with one cycle defined as 80°C (4 hours) / room temperature (0.5 hours) / -30°C (1.5 hours) / room temperature (0.5 hours) / 70°C and 95% humidity (3 hours) / room temperature (0.5 hours) / -30°C (1.5 hours) / room temperature (0.5 hours), the color mirror was subjected to 3 cycles of heating and cooling, and was then evaluated for change.
(4) Thermal shock resistance: Using a temperature transition time of 0.5 hours, and with one cycle defined as a temperature change represented by 80°C (0.5 hours) / -30°C (0.5 hours), the color mirror was subjected to 500 cycles of this temperature change, and was then evaluated for change.
(5) High temperature storage resistance: the color mirror was left to stand for 1,000 hours at a temperature of 80°C, and was then evaluated for change.
(6) Low temperature storage resistance: the color mirror was left to stand for 1,000 hours at a temperature of -30°C, and was then evaluated for change.
(7) Acid resistance: 0.2 cc of 1% $H_2SO_4$ was dripped onto the surface of the color mirror (on the side of the colored layer), and after standing for 4 hours at room temperature, the color mirror was evaluated for change.
(8) Alkali resistance: 0.2 cc of 1% NaOH was dripped onto the surface of the color mirror (on the side of the colored layer), and after standing for 4 hours at room temperature, the color mirror was evaluated for change.
(9) Accelerated weather resistance: the color mirror was left to stand inside a SWON (Sunshine weather-o-meter) for 500 hours, and was then evaluated for change.
(10) Coating film hardness: steel wool was rubbed back and forth 10 times across the surface of the coating film (the colored layer) of the color mirror with a load of 50 g/cm$^2$, and the color mirror was then evaluated for change.

EP 1 752 501 B1

Table 3

| Test name | Example 1 | Example 7 | Example 9 |
|---|---|---|---|
| oisture resistance [1] | A | A | A |
| Steam boiling resistance [1] | A | A | A |
| Hot-cold cycling resistance [1] | A | A | A |
| Thermal shock resistance [1] | - [3] | - | A |
| High temperature storage resistance [1] | - | - | A |
| Low temperature storage resistance [1] | - | - | A |
| Acid resistance [1] | - | - | A |
| Alkali resistance [1] | - | - | A |
| Accelerated weather resistance [1] | - | - | A |
| Coating film hardness [2] | B | B | A |

Table 3 Notes:
1) Evaluated visually in accordance with the criteria shown below. A: No significant color changes, peeling, or pinholes were noticeable in the color mirror B: No significant color changes or peeling were noticeable in the color mirror, but some pinholes were visible C: Significant color changes, peeling, and/or pinholes were noticeable in the color mirror
2) Evaluated visually in accordance with the criteria shown below.
A: no scratches noticeable on the color mirror
B: from 5 to 10 scratch lines were visible on the color mirror
C: the colored layer of the color mirror peeled away
3) Not evaluated

As is evident from Table 3, the color mirrors according to the present invention exhibited generally favorable results in each of the tests. In terms of the coating film hardness, the most favorable result was obtained for the example 9 that had been subjected to a higher calcination temperature. From this result it is clear that in those applications where a high degree of hardness is required of a color mirror, such as the case of a vehicle outside mirror, the calcination of the coating film must be conducted at a high temperature.


**Claims**

1. A colored coating material for a color mirror, comprising a film-forming component, a pigment, and a solvent, wherein the pigment comprises a composite calcined inorganic pigment being (Co-Cr-Ti-Al) oxide or (Co-Ni-Zn-Ti) oxide, and the pigment has a primary particle average particle size of no more than 0.1 $\mu$m, and the quantity of the pigment, relative to the combined weight of the film-forming component and the pigment, is within the range of from 40 to 90% by mass.

2. The colored coating material of claim 1, wherein the film-forming component is an inorganic binder comprising one or more materials selected from the group consisting of unmodified or modified silicone resins, colloidal silica, alkyl silicates, and water glass.

3. A process for producing the colored coating material of claim 1 or 2, comprising:

   mixing the film-forming component and the pigment within the solvent, and dispersing and kneading the pigment to achieve an average particle size of the pigment dispersed within the solvent of no more than 0.1 $\mu$m.

4. A color mirror, comprising a glass substrate, a reflective layer formed on one surface of the glass substrate, and a colored layer comprising the colored coating material of claim 1 or 2, formed on another surface of the glass substrate.

5. The color mirror of claim 4, further comprising a photocatalytic layer on top of the colored layer.

14

6. A color mirror, comprising a glass substrate, a colored layer comprising the colored coating material of claim 1 or 2, formed on one surface of the glass substrate, and a reflective layer formed on top of the colored layer.

7. The color mirror of claim 6, further comprising a photocatalytic layer on another surface of the glass substrate.

8. The color mirror of any of claims 4 to 7, wherein the chromaticity of reflected light from the color mirror, measured under conditions including a D65 light source and an angle of 10°, satisfies formulae (I) and (II) shown below for x and y coordinates of the chromaticity diagram in the CIE-XYZ color space:

$$0.25 \leq x \leq 0.35 \qquad (I)$$

$$0.30 \leq y \leq 0.40 \qquad (II)$$

wherein x and y represent chromaticity coordinate values corresponding with tristimulus values X, Y, and Z of the light source color.

9. Use of the color mirror of any of claims 4 to 8 as an inside mirror or outside mirror for a vehicle.

10. A process for producing a color mirror having a colored layer, comprising:

(a) cleaning a glass substrate,
(b) applying the colored coating material of claim 1 or 2 to one surface of the glass substrate, thereby forming a coating film,
(c) calcining the coating film to form a colored layer, and
(d) forming a reflective layer either on another surface of the glass substrate, or on top of the colored layer.

11. The process of claim 10, wherein bending of the glass substrate is conducted simultaneously with the calcining treatment of step (c).

**Patentansprüche**

1. Farbiges Überzugsmaterial für einen Farbspiegel, umfassend eine filmbildende Komponente, ein Pigment und ein Lösungsmittel, wobei das Pigment ein calciniertes anorganisches Verbundpigment umfasst, bei dem es sich um (Co-Cr-Ti-Al)-Oxid oder (Co-Ni-Zn-Ti)-Oxid handelt, und wobei das Pigment eine mittlere Teilchengröße der Primärteilchen von nicht mehr als 0,1 $\mu$m aufweist und die Menge des Pigments, bezogen auf das kombinierte Gewicht der filmbildenden Komponente und des Pigments, im Bereich von 40 bis 90 Massenprozent liegt.

2. Farbiges Überzugsmaterial nach Anspruch 1, wobei die filmbildende Komponente ein anorganisches Bindemittel ist, das ein oder mehrere Materialien, ausgewählt aus der Gruppe bestehend aus unmodifizierten oder modifizierten Siliconharzen, kolloidalem Siliciumdioxid, Alkylsilicaten und Wasserglas, umfasst.

3. Verfahren zum Herstellen des farbigen Überzugsmaterials nach Anspruch 1 oder 2, umfassend:

das Vermischen der filmbildenden Komponente und des Pigments in dem Lösungsmittel, und das Dispergieren und Kneten des Pigments, um eine mittlere Teilchengröße des in dem Lösungsmittel dispergierten Pigments von nicht mehr als 0,1 $\mu$m zu erhalten.

4. Farbspiegel, umfassend ein Glassubstrat, eine auf einer Oberfläche des Glassubstrats gebildete reflektierende Schicht und eine farbige Schicht, die das farbige Überzugsmaterial nach Anspruch 1 oder 2 umfasst, welche auf einer anderen Oberfläche des Glassubstrats gebildet ist.

5. Farbspiegel nach Anspruch 4, außerdem umfassend eine fotokatalytische Schicht über der farbigen Schicht.

**6.** Farbspiegel, umfassend ein Glassubstrat, eine farbige Schicht, die das farbige Überzugsmaterial nach Anspruch 1 oder 2 umfasst, welche auf einer Oberfläche des Glassubstrats gebildet ist, und eine über der farbigen Schicht gebildete reflektierende Schicht.

**7.** Farbspiegel nach Anspruch 6, außerdem umfassend eine fotokatalytische Schicht auf einer anderen Oberfläche des Glassubstrats.

**8.** Farbspiegel nach einem der Ansprüche 4 bis 7, wobei die Chromatizität des reflektierten Lichts von dem Farbspiegel, gemessen unter Bedingungen, die eine D65-Lichtquelle und einen Winkel von 10° einschließen, die nachstehend gezeigten Formeln (I) und (II) für die x- und y-Koordinaten des Chromatizitätsdiagramms in dem CIE-XYZ-Farbraum erfüllt:

$$0{,}25 \leq x \leq 0{,}35 \qquad (I)$$

$$0{,}30 \leq y \leq 0{,}40 \qquad (II)$$

wobei x und y Chromatizitätskoordinatenwerte bedeuten, die den Tristimulus-Werten X, Y und Z der Lichtquellenfarbe entsprechen.

**9.** Verwendung des Farbspiegels nach einem der Ansprüche 4 bis 8 als Innenspiegel oder Außenspiegel für ein Fahrzeug.

**10.** Verfahren zum Herstellen eines Farbspiegels mit einer farbigen Schicht, umfassend:

(a) das Reinigen eines Glassubstrats,
(b) das Aufbringen des farbigen Überzugsmaterials nach Anspruch 1 oder 2 auf eine Oberfläche des Glassubstrats, wodurch ein Überzugsfilm gebildet wird,
(c) das Calcinieren des Überzugsfilms, um eine farbige Schicht zu bilden, und
(d) das Bilden einer reflektierenden Schicht entweder auf einer anderen Oberfläche des Glassubstrats oder über der farbigen Schicht.

**11.** Verfahren nach Anspruch 10, wobei ein Biegen des Glassubstrats gleichzeitig mit der Calcinierungsbehandlung von Schritt (c) durchgeführt wird.

**Revendications**

**1.** Matériau de revêtement coloré pour un miroir coloré, comprenant un composant filmogène, un pigment, et un solvant, dans lequel le pigment comprend un pigment inorganique calciné composite qui est l'oxyde de (Co-Cr-Ti-Al) ou l'oxyde de (Co-Ni-Zn-Ti), et le pigment a une granulométrie moyenne des particules primaires ne dépassant pas 0,1 $\mu$m, et la quantité du pigment, par rapport au poids combiné du composant filmogène et du pigment, est située dans la plage allant de 40 à 90 % en masse.

**2.** Matériau de revêtement coloré selon la revendication 1, dans lequel le composant filmogène est un liant inorganique comprenant un ou plusieurs matériaux choisis dans l'ensemble constitué par les résines de silicone modifiées ou non modifiées, la silice colloïdale, les silicates d'alkyle, et le verre soluble.

**3.** Procédé pour produire le matériau de revêtement coloré selon la revendication 1 ou 2, comprenant les étapes consistant à mélanger le composant filmogène et le pigment dans le solvant, et à disperser et malaxer le pigment pour obtenir une granulométrie moyenne du pigment dispersé dans le solvant ne dépassant pas 0,1 $\mu$m.

**4.** Miroir coloré comprenant un substrat en verre, une couche réfléchissante formée sur une surface du substrat en verre, et une couche colorée comprenant le matériau de revêtement coloré selon la revendication 1 ou 2, formée sur une autre surface du substrat en verre.

**5.** Miroir coloré selon la revendication 4, comprenant en outre une couche photocatalytique au-dessus de la couche colorée.

**6.** Miroir coloré comprenant un substrat en verre, une couche colorée comprenant le matériau de revêtement coloré selon la revendication 1 ou 2, formée sur une surface du substrat en verre, et une couche réfléchissante formée au-dessus de la couche colorée.

**7.** Miroir coloré selon la revendication 6, comprenant en outre une couche photocatalytique sur une autre surface du substrat en verre.

**8.** Miroir coloré selon l'une quelconque des revendications 4 à 7, dans lequel la chromaticité de la lumière réfléchie par le miroir coloré, mesurée dans des conditions comprenant une source de lumière D65 avec un angle de 10°, satisfait aux formules (I) et (II) présentées ci-dessous pour les coordonnées x et y du diagramme de chromaticité dans l'espace de couleurs CIE-XYZ :

$$0,25 \leq x \leq 0,35 \qquad (I)$$

$$0,30 \leq y \leq 0,40 \qquad (II)$$

où x et y représentent les valeurs de coordonnées de chromaticité correspondant aux composantes trichromatiques X, Y et Z de la couleur de la source de lumière.

**9.** Utilisation du miroir coloré selon l'une quelconque des revendications 4 à 8 en tant que rétroviseur intérieur ou rétroviseur extérieur d'un véhicule.

**10.** Procédé pour produire un miroir coloré ayant une couche colorée, comprenant les étapes consistant à :

(a) nettoyer un substrat en verre,
(b) appliquer le matériau de revêtement coloré selon la revendication 1 ou 2 sur une surface du substrat en verre, en formant ainsi un film de revêtement,
(c) calciner le film de revêtement pour former une couche colorée, et
(d) former une couche réfléchissante soit sur une autre surface du substrat en verre, soit au-dessus de la couche colorée.

**11.** Procédé selon la revendication 10, dans lequel un cintrage du substrat en verre est effectué en même temps que le traitement de calcination de l'étape (c).

## FIG. 1

SPECTRAL REFLECTANCE CHARACTERISTICS

— GREEN MIRROR
--- BLUE MIRROR

## FIG. 2

STANDARD RELATIVE SPECTRAL SENSITIVITY CURVES

## FIG. 3

10
20
30

## FIG. 4

20
10
30

## FIG. 5

40
10
20
30

# FIG. 6

40
20
10
30

# FIG. 7

```
┌─────────────────────────────────┐
│      CLEAN GLASS SUBSTRATE       │──S701
└─────────────────────────────────┘
                 │
┌─────────────────────────────────┐
│  APPLY COLORED COATING MATERIAL  │──S702
└─────────────────────────────────┘
                 │
┌─────────────────────────────────┐
│       CALCINE COATING FILM       │──S703
└─────────────────────────────────┘
                 │
┌─────────────────────────────────┐
│       FORM REFLECTIVE LAYER      │──S704
└─────────────────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H02178603 B
- JP 2001290012 A
- EP 0905100 A
- US 6366397 B
- EP 1336592 A